# EUROPÄISCHE PATENTSCHRIFT

(11) **EP 1 343 959 B1**
(45) Veröffentlichungstag und Bekanntmachung des Hinweises auf die Patenterteilung: **19.07.2006**
(21) Anmeldenummer: 01270183.5
(22) Anmeldetag: 30.11.2001
(51) Int. Cl.: F02D 19/06, F02B 69/02, F02B 69/04

(54) **MIT VERSCHIEDENEN KRAFTSTOFFEN WAHLWEISE BETREIBBARE BRENNKRAFTMASCHINE, INSBESONDERE FÜR EINEN KRAFTFAHRZEUGANTRIEB**
INTERNAL COMBUSTION ENGINE WHICH CAN BE OPERATED WITH A CHOICE OF DIFFERENT FUELS, ESPECIALLY FOR A MOTOR VEHICLE DRIVE SYSTEM
MOTEUR A COMBUSTION INTERNE CAPABLE DE FONCTIONNER, AU CHOIX, AVEC DIFFERENTS CARBURANTS, EN PARTICULIER POUR LA COMMANDE D'UN VEHICULE

(30) Priorität: 14.12.2000 DE 10062391
(43) Veröffentlichungstag der Anmeldung: 17.09.2003
(73) Patentinhaber: ADAM OPEL AG, 65423 Rüsselsheim (DE)
(72) Erfinder: JAUSS, Andreas, 56479 Westernohe (DE)
(86) Internationale Anmeldenummer: PCT/DE2001/004510
(87) Internationale Veröffentlichungsnummer: WO 2002/048528

(56) Entgegenhaltungen:
- EP-A- 0 430 153
- DE-A- 19 539 170
- JP-A- 60 075 729
- US-A- 5 526 645

## Beschreibung

Die Erfindung betrifft eine mit verschiedenen Kraftstoffen wahlweise betreibbare Brennkraftmaschine, insbesondere für einen Kraftfahrzeugantrieb, wobei die Kraftstoffe unterschiedliche Energiedichte aufweisen, wie dies zum Beispiel bei Erdgas und Benzin der Fall ist.

Bekanntlich liegt die Leistung eines üblichen Hubkolbenmotors bei Betrieb mit Erdgas ca. 15 % unter derjenigen bei Betrieb mit Benzin. Dies gilt im Wesentlichen über das gesamte Leistungsspektrum der Brennkraftmaschine.

Bei Einsatz einer solchen Brennkraftmaschine als Antriebsmotor in einem Kraftfahrzeug wird diese unterschiedliche Leistungsentfaltung vom Fahrer immer dann als unangenehm empfunden, wenn eine volle Leistung erforderlich ist, jedoch gerade mit dem Kraftstoff geringer Energiedichte gefahren wird.

Gemäß DE 195 39 170 A1 wird zur Abhilfe dieses Nachteils vorgeschlagen, dass die Brennkraftmaschine bei hoher Leistungsnachfrage selbsttätig auf einen Betrieb mit Kraftstoff der höheren Energiedichte umschaltet und damit versorgt wird.

Dies gelingt jedoch nur dann, wenn ausreichend Kraftstoff beider Energiedichten an Bord vorrätig sind. Wenn der Kraftstoff höherer Energiedichte verbraucht ist, kann die mangelnde Leistung durch Umschalten auf diese Kraftstoffart nicht ausgeglichen werden.

Gemäß JP 60075729 ist eine Brennkraftmaschine mit eimem Ladekompressor ausgerüstet, wobei bei der Verwertung eines Kraftstoffes hoher Energiedichte wird ein waste gate Ventil geöffnet.

Aufgabe der vorliegenden Erfindung ist es, eine mit verschiedenen Kraftstoffen unterschiedlicher Energiedichte wahlweise betreibbare Brennkraftmaschine zu schaffen, die mit den zur Verfügung stehenden Kraftstoffen eine vergleichbar gleichbleibende Leistung entfalten kann.

Erfindungsgemäß wird diese Aufgabe dadurch gelöst, dass die Brennkraftmaschine mit einem Ladekompressor ausgerüstet ist, der bei Verwertung eines Kraftstoffes geringer Energiedichte zumindest bei erhöhtem Leistungsbedarf zugeschaltet ist, so dass die Brennkraftmaschine als aufgeladene Maschine arbeitet, während der Ladekompressor bei Verwertung des Kraftstoffes hoher Energiedichte abgeschaltet ist.

Der Ladekompressor kann dabei als Ladegebläse ausgebildet sein, der von einer durch das Abgas der Brennkraftmaschine angetriebene Turbine angetrieben ist (Abgasturbolader).

Ebenso kann der Ladekompressor durch die Brennkraftmaschine selbst oder auch durch einen Fremdantrieb, z. B. einen Elektromotor, angetrieben sein.

Mit der Erfindung wird eine Brennkraftmaschine geschaffen, die bei einem wahlweisen Betrieb mit alternativen Kraftstoffen unterschiedlicher Energiedichte ein nahezu gleichbleibendes Leistungskennfeld aufweist. Dies ist bei Benutzung der Brennkraftmaschine für den Antrieb eines Kraftfahrzeuges von erheblicher Bedeutung, da die Fahrbarkeit eines solchen Fahrzeuges unabhängig vom benutzten Kraftstoff gleich bleibt. Bei Verwendung eines automatischen Getriebes in einem solchen Kraftfahrzeug wird es somit nicht erforderlich, unterschiedliche Schaltkennlinien für die jeweils verwendeten Kraftstoffarten vorzusehen.

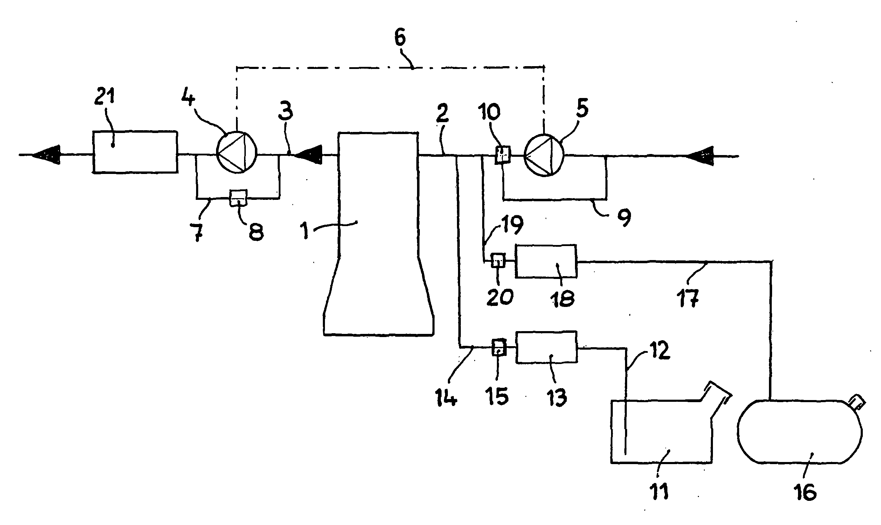

Ein Ausführungsbeispiel der Erfindung ist nachstehend anhand einer Zeichnung näher beschrieben. Die Zeichnung zeigt den schematisierten Aufbau einer erfindungsgemäß ausgestatteten Brennkraftmaschine.

Ein Hubkolbenmotor 1 ist mit einem Ansaugrohr 2 und einem Abgasrohr 3 versehen. Im Verlauf des Abgasrohres 3 befindet sich eine Abgasturbine 4. Im Verlauf des Ansaugrohres 2 befindet sich ein Ladegebläse 5. Die Abgasturbine 4 und das Ladegebläse 5 sind auf einer gemeinsamen Welle gelagert, was durch die strichpunktierte Linie 6 angedeutet ist, so dass ein an sich bekannter Abgasturbolader gebildet wird. Die Abgasturbine 4 ist mit einer Abgasbypassleitung 7 versehen, in deren Verlauf ein Abgasbypassventil 8 angeordnet ist. Das Ladegebläse 5 ist mit einer Frischluftbypassleitung 9 versehen, in deren Verlauf ein Frischluftbypassventil 10 angeordnet ist.

Ein Kraftstofftank 11 ist zur Aufnahme eines flüssigen Kraftstoffes, wie z. B. Benzin, vorgesehen. Dieser Kraftstofftank 11 steht über eine Kraftstoffleitung 12 mit einem Kraftstoffzumesssystem 13 in Verbindung. Vom Kraftstoffzumesssystem 13 führt ein weiterer Teil 14 der Kraftstoffleitung zu dem Ansaugrohr 2 des Hubkolbenmotors 1. In diesem Teil 14 der Kraftstoffleitung sind Mittel 15 zum Absperren bzw. Freigeben der Kraftstoffleitung 11 vorgesehen.

Des Weiteren ist ein Gastank 16 zur Aufnahme eines gasförmigen Kraftstoffes, wie z. B. Erdgas, vorgesehen. Dieser Gastank 16 steht über eine Gasleitung 17 mit einem Gaszumesssystem 18 in Verbindung. Vom Gaszumesssystem 18 führt ein weiterer Teil 19 der Gasleitung zu dem Ansaugrohr 2 des Hubkolbenmotors 1. In diesem Teil 19 der Gasleitung sind Mittel 20 zum Absperren oder Freigeben der Gasleitung 17 vorgesehen.

Die Mittel 15 bzw. 20 sind vorzugsweise als elektrisch ansteuerbare Ventile ausgeführt.

Im Verlauf des Abgasrohres 3 befindet sich stromab der Abgasturbine 4 ein Katalysator 21 zur Reduzierung der schädlichen Abgasbestandteile.

Das Abgasbypassventil 8, das Frischluftbypassventil 10 und die in der Kraftstoffleitung 12 bzw. der Gasleitung 17 vorgesehenen Mittel 15 bzw. 20 zum Absperren oder Freigeben dieser Leitungen werden von einem nicht dargestellten elektronischen Motorsteuerungssystem, welches über Sensoren den jeweils gewünschten Betriebszustand des Hubkolbenmotors 1 erkennt, angesteuert.

Soll der Hubkolbenmotor 1 mit Benzin betrieben werden, dann wird das Frischluftbypassventil 10 sowie das Abgasbypassventil 8 geöffnet. Die Mittel 20 in der Gasleitung 17 werden geschlossen. Die Mittel 15 in der Kraftstoffleitung 12 sind geöffnet. Der Hubkolbenmotor 1 läuft so als reiner Saugmotor mit Benzin aus dem Kraftstofftank 11.

Soll aber der Hubkolbenmotor mit Erdgas weiter betrieben werden, dann sind die Mittel 15 in der Kraftstoffleitung 12 geschlossen, und die Mittel 20 in der Gasleitung 17 sind geöffnet. Um die infolge der gegenüber Benzin geringeren Energiedichte bei Erdgasbetrieb nachlassenden Leistung der Brennkraftmaschine auszugleichen, wird das Abgasbypassventil 8 sowie das Frischluftbypassventil 10 geschlossen. Die Abgasturbine 4 läuft an und treibt das Ladegebläse 5. Dadurch wird der Hubkolbenmotor 1 mit einer größeren Ladung als im Saugbetrieb versorgt, so dass die Leistung trotz Verwendung von Erdgas als Kraftstoff wieder auf den bei Benzinbetrieb gewohnten Wert steigt.

Bei Verwendung einer solchen Brennkraftmaschine in einem Kraftfahrzeug bleibt somit die gewohnte Fahrbarkeit auch bei alternativer Verwendung von Erdgas neben Benzin als Kraftstoff erhalten.

## Patentansprüche

1. Mit verschiedenen Kraftstoffen unterschiedlicher Energiedichte wahlweise betreibbare Brennkraftmaschine, insbesondere für einen Kraftfahrzeugantrieb, **dadurch gekennzeichnet, dass** die Brennkraftmaschine mit einem Ladekompressor ausgerüstet ist, der bei Verwertung eines Kraftstoffes geringer Energiedichte zumindest bei erhöhtem Leistungsbedarf zuschaltbar ist, so dass die Brennkraftmaschine als aufgeladene Maschine arbeitet, während der Ladekompressor bei Verwendung eines Kraftstoffes hoher Energiedichte abgeschaltet ist und die Brennkraftmaschine als selbstansaugende Maschine arbeitet.

2. Brennkraftmaschine nach Anspruch 1, **dadurch gekennzeichnet, dass** der Ladekompressor als von einer Abgasturbine (4) angetriebenes Ladegebläse (5) ausgebildet ist.

3. Brennkraftmaschine nach Anspruch 1, **dadurch gekennzeichnet, dass** der Ladekompressor über eine schaltbare Kupplung direkt von der Brennkraftmaschine angetrieben ist.

4. Brennkraftmaschine nach Anspruch 1, **dadurch gekennzeichnet, dass** der Ladekompressor durch einen Fremdantrieb angetrieben ist.

5. Brennkraftmaschine nach Anspruch 4, **dadurch gekennzeichnet, dass** der Fremdantrieb zum Antreiben des Ladekompressors von einem Elektromotor gebildet ist.

## Claims

1. Internal combustion engine, in particular for a motor vehicle drive system, which can be selectively operated with different fuels of different energy density, **characterised in that** the internal combustion engine is fitted with a supercharger, which when utilising a fuel of low energy density can be switched on at least when increased power is required, so that the internal combustion engine operates as a supercharged engine, while the supercharger is switched off when using a fuel of high energy density and the internal combustion engine operates as a naturally aspirated engine.

2. Internal combustion engine according to Claim 1, **characterised in that** the supercharger is configured as a blower (5) driven by an exhaust gas turbine (4).

3. Internal combustion engine according to Claim 1, **characterised in that** the supercharger is driven by means of an engagable coupling directly by the internal combustion engine.

4. Internal combustion engine according to Claim 1, **characterised in that** the supercharger is driven by a separate drive.

5. Internal combustion engine according to Claim 4, **characterised in that** the separate drive for driving the supercharger is formed by an electric motor.

## Revendications

1. Moteur à combustion interne capable de fonctionner, au choix, avec différents carburants de différentes densités de flux d'énergie, en particulier pour l'entraînement d'un véhicule, **caractérisé en ce que** le moteur à combustion interne est équipé d'un compresseur de suralimentation qui peut être activé lors de l'utilisation d'un carburant d'une plus faible densité de flux d'énergie au moins en cas de besoin accru de puissance, de sorte que le moteur à combustion interne fonctionne comme moteur suralimenté, alors que le compresseur de suralimentation est désactivé lors de l'utilisation d'un carburant d'une densité élevée de flux d'énergie et que le moteur à combustion interne fonctionne comme moteur non suralimenté.

2. Moteur à combustion interne selon la revendication 1, **caractérisé en ce que** le compresseur de suralimentation est conçu comme turbocompresseur (5) entraîné par une turbine à gaz d'échappement (4).

3. Moteur à combustion interne selon la revendication 1, **caractérisé en ce que** le compresseur de suralimentation est entraîné directement par le moteur à combustion interne par le biais d'un embrayage.

4. Moteur à combustion interne selon la revendication 1, **caractérisé en ce que** le compresseur de suralimentation est entraîné par un entraînement externe.

5. Moteur à combustion interne selon la revendication 4, **caractérisé en ce que** l'entraînement externe pour entraîner le compresseur de suralimentation est formée par un moteur électrique.
